# EUROPÄISCHE PATENTSCHRIFT

(11) **EP 1 674 358 B1**
(45) Veröffentlichungstag und Bekanntmachung des Hinweises auf die Patenterteilung: **01.08.2007**
(21) Anmeldenummer: 04030581.5
(22) Anmeldetag: 23.12.2004
(51) Int. Cl.: B60T 7/08, B60T 17/22, B60T 13/66

(54) **Notbremsüberbrückung**
Emergency brake over-ride
Système de désactivation d'un signal d'alarme

(43) Veröffentlichungstag der Anmeldung: 28.06.2006
(73) Patentinhaber: DB Regio AG, 60326 Frankfurt am Main (DE)
(72) Erfinder: Humpsch, Wolfgang, 49453 Rehden (DE)
(74) Vertreter: Zinken-Sommer, Rainer

(56) Entgegenhaltungen:
- EP-A- 0 844 157
- CH-A- 593 162
- DE-C1- 10 209 913
- DE-U1- 20 319 547

## Beschreibung

Die Erfindung betrifft ein Verfahren zur Steuerung einer Notbremsüberbrückungseinrichtung, im Folgenden mit NBÜ abgekürzt. Dieses Verfahren wird insbesondere bei Fahrzeugen angewendet, die auf Strecken des Schienenverkehrs verkehren, bei denen es mindestens teilweise bei Betätigung einer Notbremse erforderlich ist nicht sofort anzuhalten, sondern möglichst rasch bis zu einem geeigneten Halteplatz weiterzufahren.
Fahrzeuge des Schienenverkehrs zur Personenbeförderung müssen mit Notbremsen ausgerüstet sein, die es dem Fahrgast ermöglichen, in gefährlichen Situationen einen Halt zu veranlassen. In bestimmten Situationen, z.B. wenn sich der Fahrzeugverband in einem Streckenabschnitt befindet, in dem eine sichere Evakuierung oder Rettung nicht möglich ist, kann es jedoch erforderlich sein, nicht sofort anzuhalten, sondern möglichst rasch bis zu einem geeigneten Halteplatz weiterzufahren. Zu diesem Zweck muss der Fahrzeugführer die Möglichkeit haben, die Notbremse zu überbrücken
Im Stand der Technik sind verschiedene Verfahren zum Steuern der Notbremsüberbrückung in druckluftgebremsten Fahrzeugen des Schienenverkehrs zur Personenbeförderung bekannt.
So sind aus dem Merkblatt UIC 541-5, aus Veröffentlichungen zu einem von der Deutschen Bahn AG für schnell fahrende Reisezüge entwickelten System, sowie aus DE 203 19 547 Verfahren mit einer direkt und unmittelbar wirkender Fahrgastnotbremse bekannt, die anschließend durch den Fahrzeugführer wieder überbrückt werden kann. Bei diesem Verfahren wird nach Betätigung einer Fahrgastnotbremse zunächst unmittelbar und ohne Zeitverzug eine Bremsung mit festgelegten Parametern eingeleitet. Der Fahrzeugführer wird über das Ereignis informiert und hat die Möglichkeit durch eine Bedienhandlung die Notbremse zu überbrücken und die eingeleitete Bremsung wieder aufzuheben. Werden im Fahrzeugverband weitere Fahrgastnotbremsen betätigt, wiederholt sich der Vorgang. Dieses Verfahren bedingt, dass der Zug, abhängig von Ausgangsgeschwindigkeit, Bremsbauart, Fahrzeugbeschaffenheit und zeitlichem Abstand bei Mehrfachbetätigung, zum Halt kommen kann. Dies hat den Nachteil, dass dabei Reisende mittels Notentriegelung der Einstiegtüren in einem gefährdeten Streckenabschnitt aussteigen könnten. Durch die Einleitung der Bremsung wird das Erreichen eines sicheren Halteplatzes verzögert. Um nach einem möglichen Halt eine möglichst unverzügliche Weiterfahrt zu ermöglichen, ist der Einbau einer ep-Bremse, die das Auffüllen der Hauptluftleitung nach einer Bremsung beschleunigt, erforderlich. Die Notbremsüberbrückung wirkt in den betreffenden Wagen solange, bis die Notbremseinrichtungen manuell rückgestellt sind. Das bedingt, dass auch nach einem Halt mit freigegebenem Ausstieg eine Wiederanfahrt mit überbrückter Notbremse möglich ist. Dadurch ist während der folgenden Zugfahrt die Notbremseinrichtung in den betroffenen Fahrzeugen wirkungslos.
Gemäß einem weiteren bekannten Verfahren wird nach dem die Betätigung der Notbremseeinrichtung lediglich ein Alarmsignal vom Fahrgast zum Fahrzeugführer ausgelöst. Dieser entscheidet, ob und wann er eine Bremsung einleitet. Dieses Verfahren hat insbesondere den Nachteil, dass die meisten Personenunfälle während der Anfahrt am Bahnsteig z.B. durch Einklemmen oder Aufspringen auf den Zug geschehen. Durch die nur mittelbar wirkende Notbremseinrichtung erfolgt ein Nothalt verzögert. Falls der Fahrzeugführer nicht auf das Notbremssignal reagiert, haben Reisende keine Möglichkeit, den Zug anzuhalten und die Gefahrensituation abzuwenden.
Bei U-Bahnen oder Stadtschnellbahnen ist ein Verfahren bekannt, nach dem die Notbremseinrichtung nur bei Halt des Zuges und bei Anfahrt am Bahnsteig unmittelbar wirkt. Danach hat sie bis zum folgenden Halt nur Signalwirkung. Mit diesem Verfahren kann der Zug zwar bei Gefährdungen, die im Zusammenhang mit Fahrgastwechsel auftreten, sofort angehalten werden, während der Fahrt hat der Reisende jedoch keine Möglichkeit, den Zug ohne Mitwirkung des Fahrzeugführers anzuhalten. Das Verfahren ist deshalb nur auf Strecken mit geringem Haltestellenabstand, anwendbar. Es wird deshalb nur, bei U-Bahnen oder Stadtschnellbahnen benutzt.
Bei der Schweizerischen Bundesbahn SBB hat ist ein Verfahren bekannt, bei dem das Ansprechen der Notbremseinrichtung nach Betätigung der Fahrgastnotbremse grundsätzlich um eine bestimmte Zeit verzögert wird. Bei Zughalt am Bahnsteig und während anschließender Anfahrt wirkt die Notbremse unmittelbar nach Ablauf dieser Zeit. Während der anschließenden Zugfahrt löst die Betätigung ein Signal zum Fahrzeugführer und automatisch eine Notbremsüberbrückung aus. Gleichzeitig wird ein Zeitglied gestartet. Während dieser Zeit hat der Fahrzeugführer die Möglichkeit, die Notbremsung auszulösen oder die Überbrückung zu bestätigen. Reagiert er in dieser Zeit nicht, bleibt die Notbremsüberbrückung im betreffenden Wagen zwar wirksam, im führenden Fahrzeug wird jedoch eine Zwangsbremsung eingeleitet. Dieses Verfahren besitzt folgende Nachteile:
- eine Notbremsung wirkt in jedem Fall, d.h. auch bei ausgeschalteter NBÜ-Funktion zeitverzögert.,
- auch nach einem Halt mit freigegebenem Ausstieg ist eine Wiederanfahrt mit überbrückter Notbremse möglich,
- die Notbremseinrichtung im betroffenen Fahrzeug ist bis zur Rückstellung der betreffenden Notbremseinrichtung wirkungslos.

Bei den gegenwärtig eingesetzten Verfahren erfolgt keine Kontrolle der Wirksamkeit des NBÜ- Befehls bis zur letzten Einheit des Zugverbandes.
Ein weiterer Nachteil der bisher bekannten Verfahren besteht darin, dass wenn die Steuerung infolge eines technischen Defekts ständig ein Quittierungssignal für eine Notbremsmeldung erkennt, bei Betätigung einer Fahrgastnotbremse diese nicht akustisch gemeldet wird.

Es ist somit Aufgabe der Erfindung, ein Verfahren für eine NBÜ bereitzustellen, welches die Nachteile des Standes der Technik löst und für alle Fahrzeuge zur Personenbeförderung im Eisenbahn- Nah- und Fernverkehr anwendbar ist.
Diese Aufgabe wird in Verbindung mit dem Oberbegriff des Hauptanspruches erfindungsgemäß durch die in Anspruch 1 angegebenen Merkmale gelöst.
Ansprüche 2 bis 26 beinhalten vorteilhafte Ausführungsbeispiele der erfindungsgemäßen Lösung aus Anspruch 1.
Vorteilhaft werden durch die Erfindung die folgenden Bedingungen beim Betrieb von Personenzügen erfüllt:
- in bestimmten Fällen wird die Notbremse überbrückt,
- bei einer Notalarmierung ist sichergestellt, dass der Zug durch das Notbremssystem nicht unzeitig zum Halten gebracht wird, der Fahrzeugführer den nächst erreichbaren Rettungsort bestimmt und den Zug dort zum Halten bringt,
- das Notalarmierungssystem leitet eine automatische Bremsung ein, sofern der Fahrzeugführer das Notalarmierungssignal nicht in angemessener Zeit quittiert,
- die Überlagerung weiterer Notalarmierungen führt nicht zu einer automatischen Bremsreaktion des Zuges,
- der Fahrgast erhält eine wahrnehmbare Empfangsbestätigung nach der Notalarmierung,
- bei einer Notalarmierung bei Anfahrt am Bahnsteig nach einem Fahrgastwechsel wird der Zug automatisch durch eine sofortige Bremsung zum Halten gebracht.

Erfindungsgemäß sind an Erzeugung, Verarbeitung und Übertragung der entsprechenden Meldungen und Befehle zur Steuerung des Notbremssystems im Führerraum folgende Komponenten beteiligt:
- ein Schalter mit dem die Funktion NBÜ aktiviert werden kann,
- ein optisches und ein akustisches Element zur Signalisierung einer Notbremsbetätigung im Zug,
- ein Bedienelement, über das der Fahrzeugführer eine Notbremsüberbrückung auslösen oder bestätigen kann. Dies kann ein separater Taster im Griffbereich des Führerbremsventils oder ein Schaltkontakt, der durch Verlegen des Führerbremsventils in Füllstoßstellung betätigt wird, sein.

In den Fahrgasträumen sind folgende Baugruppen vorhanden:
- Betätigungseinrichtungen mit einem elektrischen Signalgeber, der auf einen durch den gesamten Zugverband führenden Signalweg wirkt,
- Ein Signalgeber, welcher die Fahrgäste über die Registrierung ihrer Notbremsanforderung informiert.

Im führenden Fahrzeug werden entsprechend einer technischen Ausführung einer Notbremsüberbrückungseinrichtung in den geführten Fahrzeugen zusätzlich bekannte Verfahren zur Steuerung der Notbremsüberbrückung des Standes der Technik implementiert. Insbesondere während einer Übergangsfrist sind die Wagen des Zugverbandes mit mehreren Systemen einer NBÜ, dem erfindungsgemäßen Verfahren sowie weiteren Verfahren des Standes der Technik, ausgerüstet. Hierdurch wird gewährleistet, dass alle Fahrzeuge mit mindestens einem übereinstimmenden Verfahren zur NBÜ ausgerüstet sind, so dass eine funktionstüchtige NBÜ gegeben ist. Eine Entscheidung, welches der im Zugverband vorhandenen Verfahren zur NBÜ verwendet wird, wird im führenden Fahrzeug getroffen und entsprechend auf diese umgeschaltet.

Über einen Geschwindigkeitsgeber wird der Bewegungszustand des Zuges erfasst.
Züge, die mit Notbremsüberbrückung betrieben werden, müssen mit einer zentralen Verriegelung der Einstiegtüren ausgerüstet sein.
Über eine Wirkgruppe Notbremse kann eine Notbremsung des Zuges direkt ausgelöst werden. Für einen betrieblich nicht trennbaren Zugverband kann die Wirkgruppe zentral oder bei frei kuppelbaren Einheiten auch dezentral in jedem Wagen angeordnet sein. Die Wirkgruppen werden zum pneumatischen Bremsen direkt angesteuert und haben eine zusätzliche Einrichtung mit der die Notbremsung überbrückt werden kann.
Eine zentral im Zugverband angeordnete Steuerung empfängt alle Befehle und Meldungen aus Führerraum, Fahrzeugsteuerung und Zug, verarbeitet diese nach einer vorgegebenen Logik und gibt entsprechende Befehle an die Notbremswirkgruppe und an die Signalgeber im Führerraum und im Zug.
Alle Einheiten des Zugverbandes sind über ein Übertragungssystem für Informationen und Steuerbefehle mit der zentralen Steuerung verbunden. Dieses überträgt unabhängig voneinander folgende Signale:
- Meldung der Betätigung einer Fahrgastnotbremse. Der Leitungsweg wird permanent überwacht,
- Befehl Notbremsüberbrückung für den Fall, dass der Zugverband aus mehreren Einheiten mit dezentral wirkenden Notbremswirkgruppen besteht. Dabei wird die Befehlsausgabe bis zum Zugschluss überwacht.

Als Übertragungsmedium werden insbesondere eingesetzt:
- vier Adern der Steuerleitung nach UIC 541-5, bevorzugt bei lokbespannten Zügen,
- spezielle Leiterschleifen, hauptsächlich bei Triebzügen,
- digitale Telegramme in einem elektronischen Bussystem auf einer speziellen Leitung, bei lokbespannten Zügen und Triebzügen.

Erfindungsgemäß reagiert die Notbremseinrichtung entsprechend der betrieblichen Erfordernisse wie Halt für Ein- und Ausstieg der Fahrgäste, sofortiger Halt bei Gefahr während Anfahrt unmittelbar nach Fahrgastwechsel, kein Halt in Streckenabschnitten, wo erhöhte Gefährdung besonders bei Brand besteht und wo kein sicherer Ausstieg für Reisende möglich ist, automatischer Halt bei ausbleibender Reaktion des Fahrzeugführers auf eine Notalarmierung, unterschiedlich auf die Betätigung einer Fahrgastnotbremse. Die Funktion Notbremsüberbrückung (NBÜ) ist wahlweise einschaltbar. Ist sie ausgeschaltet, löst die Betätigung einer Notbremseinrichtung im Zug unabhängig vom Handeln des Fahrzeugführers eine sofortige Notbremsung des Zuges aus. Bei aktivierter Funktion "NBÜ" bewirkt die Betätigung einer Fahrgastnotbremse während eines zum Ein- und Ausstieg bestimmten Zughaltes und während einer darauf folgenden Anfahrt eine sofortige, nicht überbrückbare Notbremsung. Nach der Anfahrphase ist die Notbremse bis zum nächsten zum Ein- und Ausstieg bestimmten Halt überbrückt. Die Betätigung einer Fahrgastnotbremse während dieser Phase löst eine zeitverzögerte Bremsung nur dann aus, wenn der Fahrzeugführer nach der Notbremsmeldung die Überbrückung nicht während dieser Zeit bestätigt. Nach einer Bestätigung bleiben alle Notbremsen überbrückt. Beim nächsten zum Aussteigen bestimmten Halt wird die Überbrückung wieder aufgehoben, so dass die betätigten Notbremsen bis zu ihrer manuellen Rückstellung wirken. Ein Vorteil dieses Erfindungsanspruchs besteht darin, dass die NBÜ auch ohne System der ep-Bremse ohne Einschränkungen verfügbar ist. Für diese Funktion sind getrennte Signalwege für Meldung "FGN" und Befehlsausgabe "NBÜ" erforderlich. Die Funktionsfähigkeit des NBÜ- Befehls bis zur letzten Einheit des Zugverbandes wird geprüft, indem seine Wirksamkeit an der letzten Einheit des Zugverbandes ein entsprechendes Signal über den Meldeweg Fahrgastnotbremse auslöst, welches im Führerraum entsprechend ausgewertet und angezeigt wird.
Bei Signalübertragung nach UIC 541-5 werden für die Befehlsübertragung vorteilhaft die Adern 1 und 2 verwendet. Die Funktionsfähigkeit des NBÜ- Befehls bis zur letzten Einheit des Zugverbandes wird bei diesem System vorteilhaft damit überprüft, dass seine Ausgabe eine definierte Änderung des Zugschlusswiderstandes zwischen den Adern D und 4 hervorruft. Diese Widerstandsänderung wird im führenden Fahrzeug registriert und entsprechend ausgewertet.
Erfindungsgemäß ist der Funktionsablauf strukturiert aus Blöcken aufgebaut.
Nach Ansprüchen 20 bis 22 erfolgt eine Kontrolle der Wirksamkeit des NBÜ-Befehls bis zur letzten Einheit des Zugverbandes.
Gemäß Anspruch 26 bewirkt die erste Betätigung einer Fahrgastnotbremse unabhängig von einem Quittierungssignal eine akustische Meldung mit einer bestimmten Zeitdauer.

Die Erfindung wird nachstehend anhand von einem Ausführungsbeispiel mit einer Zeichnung mit 5 Figuren näher erläutert. Die Figuren zeigen in
- **Fig. 1**: schematisch ein Beispiel eines Ablaufplanes, nach dem eine Zugfahrt in mehrere Phasen unterteilt ist,
- **Fig. 2**: schematisch ein Beispiel eines Ablaufplanes zur Aktivierung der Funktion "NBÜ" über einen Betriebsartenschalter,
- **Fig. 3**: schematisch ein Beispiel eines Ablaufplanes zur Steuerung des NBÜ- Befehls entsprechend der einzelnen Phasen einer Zugfahrt,
- **Fig. 4**: schematisch ein Beispiel eines Ablaufplanes für die Überwachung der Fahrgastnotbremsen und der Wirkung des Befehls "NBÜ" am letzten Fahrzeug des Zugverbandes bei Nutzung der Übertragungswege nach Merkblatt UIC 541-5,
- **Fig. 5**: schematisch ein Beispiel eines Ablaufplanes zur Steuerung der akustischen Meldung Fahrgastnotbremse im Führerraum.

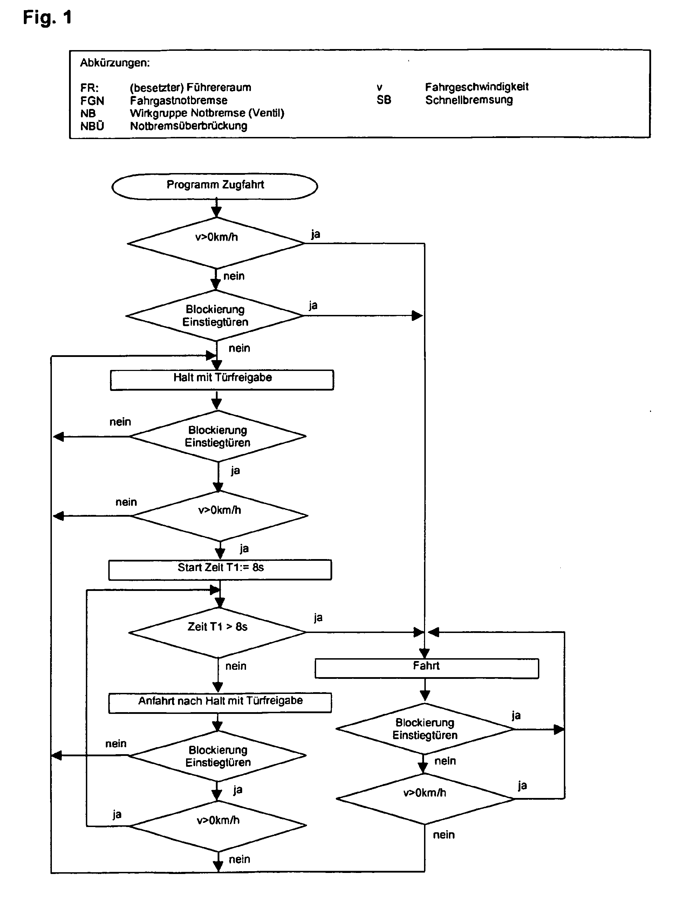

Nach **Fig. 1** wird eine Zugfahrt in einzelne Phasen unterteilt:
- Halt mit zur Öffnung freigegebenen Einstiegtüren
   Kriterien: Fahrgeschwindigkeit v=0 und Einstiegtüren nicht blockiert
- Anfahrt nach Halt mit Türfreigabe
   Kriterien: Unter den Bedingungen, Einstiegtüren sind blockiert und der Zug rollt (Fahrgeschwindigkeit v>0) läuft eine bestimmte Zeit T1 ab. Diese Zeit wird für bestimmte Zuggattungen unter Berücksichtigung von Anfahrbeschleunigung, Bremsvermögen und Zuglänge so festgelegt, dass bei einer Notbremsung der Zug so zum Halt kommt, dass Fahrgäste den Bahnsteig sicher wieder erreichen können.
- Fahrt
   Kriterien: Phase "Fahrt" beginnt, wenn die Zeit T1 bei blockierten Einstiegtüren und rollendem Zug abgelaufen ist (Phase Anfahrt beendet) und endet, wenn der Zug steht (Zuggeschwindigkeit v=0) und die Einstiegtüren zur Öffnung freigegeben sind (Blockierung aufgehoben). Damit ist wieder die Phase "Halt mit Türfreigabe erreicht.

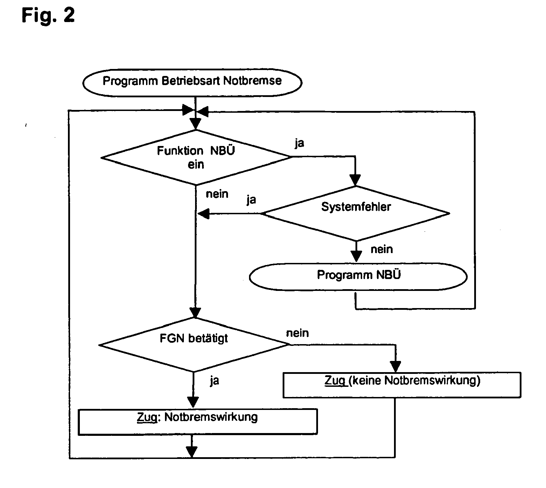

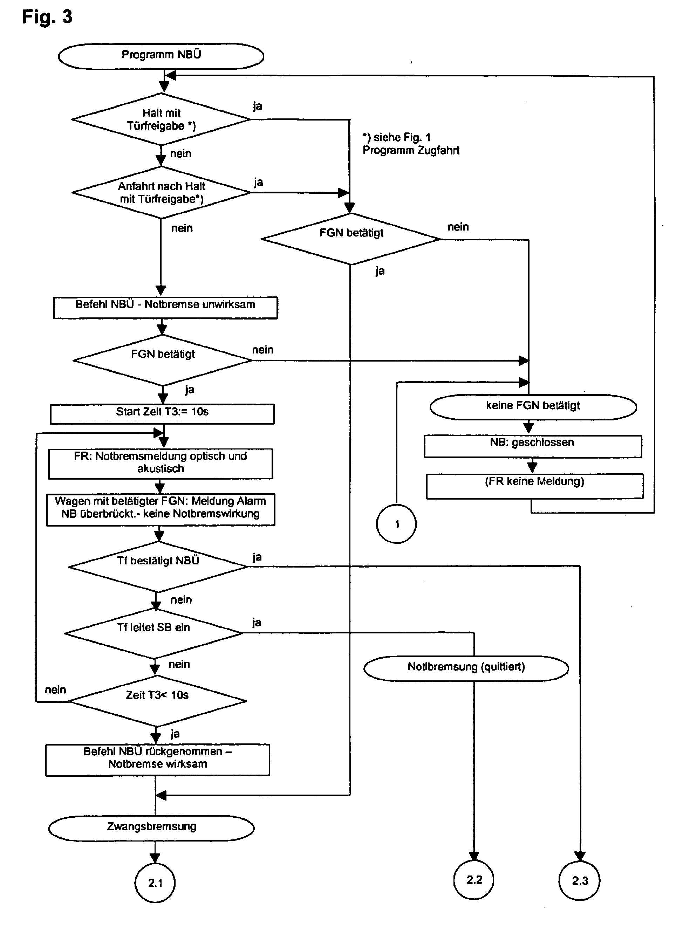

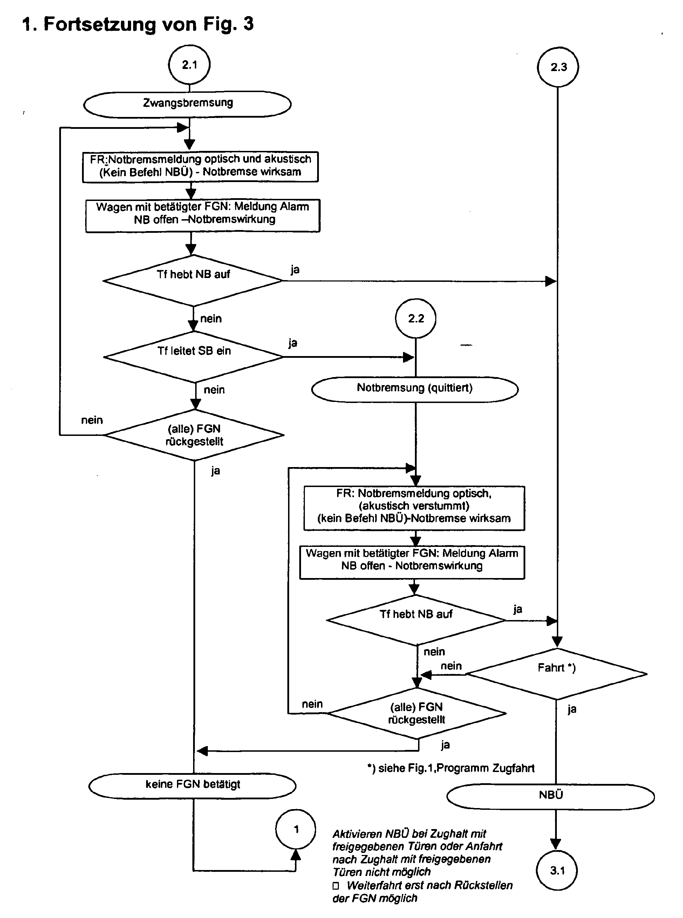

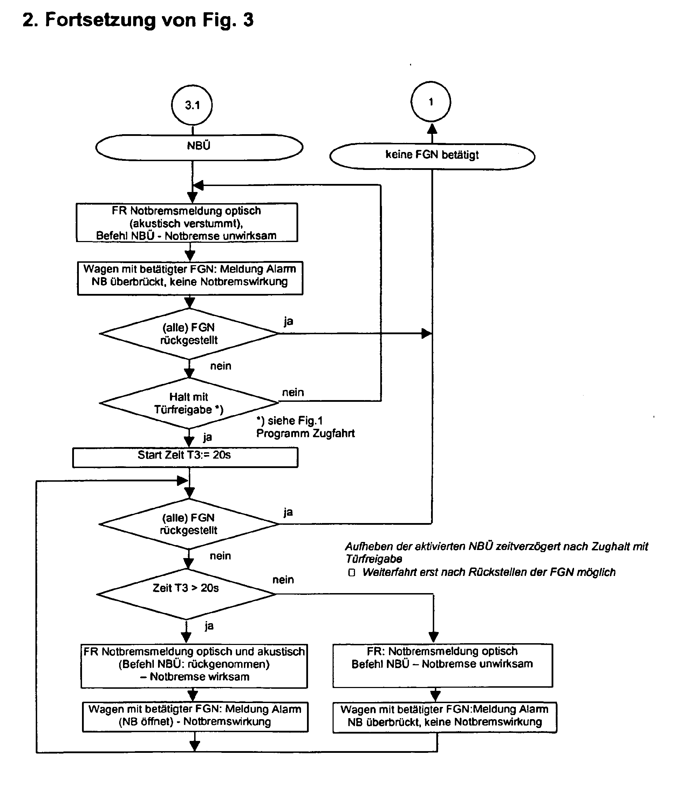

Nach **Fig. 2** erfolgt die Aktivierung der Funktion "NBÜ" über einen Betriebsartenschalter und wird durch ein zentrales Logikmodul gesteuert.
Ist die Funktion "NBÜ" über den Betriebsartenwahlschalter nicht eingeschaltet, oder das System weist einen Fehler auf, so bewirkt die Betätigung einer Notbremse die sofortige und unmittelbare Einleitung einer Bremsung durch die Notbremswirkgruppe.
Nach Fig. 3 erfolgt eine Steuerung des NBÜ- Befehls entsprechend der einzelnen Phasen einer Zugfahrt.
Das System kann auf die Betätigung einer Notbremse, je nach Phase der Zugfahrt und Handlung des Fahrzeugführers, differenziert mit Zwangsbremsung, Notbremsung, oder Notbremsüberbrückung (NBÜ) reagieren

### Betätigung einer Notbremse:

Die Betätigung einer Notbremse löst in jeder Phase im Führerraum eine optische und eine akustische Meldung aus. Desweiteren wird während Halt mit Türfreigabe und während einer Anfahrt nach Halt mit Türfreigabe eine sofortige Zwangsbremsung ausgelöst, die vom Fahrzeugführer auch nicht überbrückt werden kann. Die Bestätigung der Notbremsmeldung durch den Fahrzeugführer bewirkt lediglich ein Verstummen der akustischen Meldung.
Während einer Fahrt nach der Anfahrphase, ist die Notbremseinrichtung durch einen permanenten NBÜ-Befehl unwirksam geschaltet.
Erfolgt keine Notbremsbetätigung, wird dieser Befehl wieder aufgehoben bei Zughalt mit Türfreigabe oder durch Ausschalten der Betriebsart NBÜ.
Wird in dieser Phase eine Notbremse betätigt, bleibt die Notbremswirkgruppe für eine bestimmte Zeit T2. weiterhin unwirksam.

### Funktion NBÜ:

Soll die Fahrt fortgesetzt werden, muss der Fahrzeugführer diese erste Notbremsmeldung in dem vorgegebenen Zeitrahmen (Zeit T2) quittieren. Damit ist die NBÜ bis zum nächsten Halt mit Türfreigabe wirksam geschaltet. Und die Notbremswirkgruppen im gesamten Zug unwirksam.
Die akustische Meldung verstummt. Nach der ersten durch den Fahrzeugführer quittierten Notbremsmeldung und damit wirkender NBÜ, werden ihm weitere Notbremsbetätigungen nicht erneut akustisch signalisiert. Die optische Meldung bleibt bestehen, bis alle Fahrgastnotbremsen im Zug rückgestellt sind.

Die Überbrückung bleibt auch bei außerplanmäßigem Halt auf freier Strecke (z.B. Halt-zeigendes Signal) wirksam, solange keine Freigabe der Türblockierung erfolgt.
Die Aufhebung der nach Betätigung einer Fahrgastnotbremse und Quittierung durch den Fahrzeugführer wirkenden NBÜ erfolgt mit der Zeitverzögerung (Zeit T3) nach Erreichen der Phase Zughalt mit Türfreigabe. Damit wird die Notbremsung wirksam. Eine Aufhebung der Notbremsung ist nur durch manuelles Rückstellen der betätigten FGN möglich.

### Funktion Zwangsbremsung

Reagiert der Fahrzeugführer auf eine Notbremsmeldung während der Phase Fahrt nicht innerhalb der Zeit T2, wird die Notbremsüberbrückung unwirksam und die Notbremsung eingeleitet.
Solange inzwischen kein neuer Halt mit Türfreigabe vorliegt, kann er diese zwangsweise eingeleitete Notbremsung wieder überbrücken.

### Funktion Notbremsung (quittiert)

Entscheidet der Fahrzeugführer, bei Notbremsmeldung während der Phase Fahrt, den Zug anzuhalten, so leitet er eine Schnellbremsung ein. Damit wird der Befehl NBÜ sofort rückgesetzt und die Notbremsung über die Wirkgruppe wirksam. Solange nicht die Phase Zughalt mit Türfreigabe erreicht ist, kann die quittierte Notbremsung manuell wieder aufgehoben werden (siehe Funktion NBÜ).
Für Zugverbände, die aus frei konfigurierbaren Einheiten bestehen, kann die Steuerung in den führenden Fahrzeuge so ausgelegt werden, dass je nach Ausrüstung der geführten Fahrzeuge zwischen dem erfindungsgemäßen Verfahren und den bisher bekannten und angewendeten Verfahren gewählt wird.

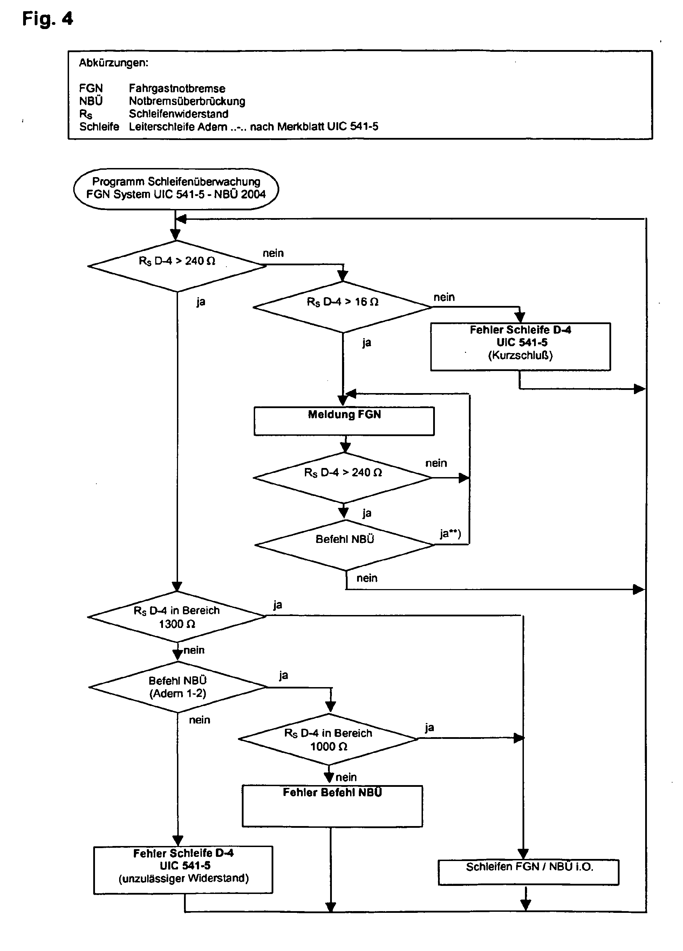

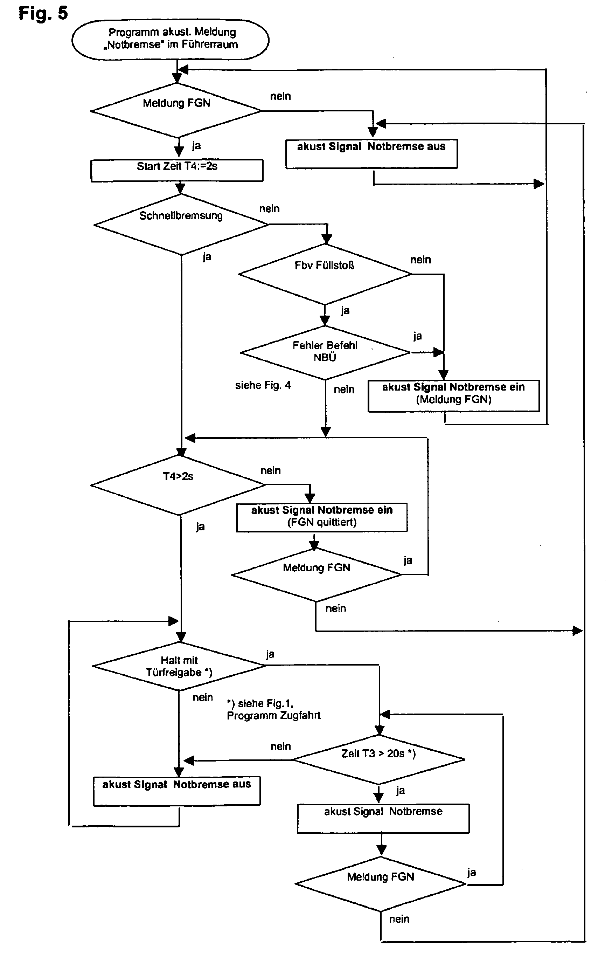

In **Fig. 4** ist beispielhaft die Überwachung der Fahrgastnotbremsen und der Wirkung des Befehls "NBÜ" am letzten Fahrzeug des Zugverbandes bei Nutzung der Übertragungswege nach Merkblatt UIC 541-5 dargestellt.
Erkennt die Steuerung infolge eines technischen Defekts ständig ein Quittierungssignal für eine Notbremsmeldung, wird bei Betätigung einer Fahrgastnotbremse diese nicht akustisch gemeldet.

Fig. 5 zeigt die Steuerung der akustischen Meldung Fahrgastnotbremse im Führerraum. Danach bewirkt die erste Betätigung einer Fahrgastnotbremse unabhängig von einem Quittierungsbefehl eine akustische Meldung von einer bestimmten Mindestzeitdauer. Diese verstummt bei Quittierung durch den Fahrzeugführer unter der Bedingung, dass kein Fehler bei Ausgabe und Übertragung des NBÜ- Befehls erkannt wird.

## Patentansprüche

1. Verfahren zur Steuerung einer Notbremsüberbrückungseinrichtung, im Folgenden mit NBÜ abgekürzt, und einer Überwachung der Notbremseinrichtungen von schienengebundenen Fahrzeugen, die aus einem einzelnen Fahrzeug, oder einem Fahrzeugverband aus einem führenden Fahrzeug und mindestens einem geführten Fahrzeug bestehen, wobei die Anzahl der geführten Fahrzeuge sowie eine Zusammensetzung des Fahrzeugverbandes anpassbar an bestimmte Gegebenheiten wie Passagieraufkommen oder einen Streckenverlauf ist, **dadurch gekennzeichnet dass**
- die Funktion Notbremsüberbrückung auf Strecken, auf denen eine NBÜ vorgeschrieben ist, eingeschaltet wird und auf Strecken, auf denen eine NBÜ nicht erforderlich ist, ausgeschaltet wird,
- bei ausgeschalteter Funktion Notbremsüberbrückung die Betätigung einer Fahrgastnotbremse im Zug unabhängig vom Handeln des Fahrzeugführers eine sofortige Notbremsung des Zuges ausgelöst wird,
- im führenden Fahrzeug entsprechend einer technischen Ausführung einer Notbremsüberbrückungseinrichtung in den geführten Fahrzeugen zusätzlich bekannte Verfahren zur Steuerung der Notbremsüberbrückung des Standes der Technik implementiert werden und auf diese entsprechend umgeschaltet wird.

2. Verfahren zur Steuerung einer Notbremsüberbrückungseinrichtung nach Anspruch 1, **dadurch gekennzeichnet dass** bei aktivierter Funktion "NBÜ" das technische System entsprechend der jeweiligen Betriebssituation unterschiedlich auf die Betätigung von Fahrgastnotbremsen reagiert.

3. Verfahren zur Steuerung einer Notbremsüberbrückungseinrichtung nach mindestens einem der Ansprüche 1 und 2, **dadurch gekennzeichnet dass** durch einen NBÜ-Befehl vom führenden Fahrzeug aus die Notbremseinrichtungen des gesamten Zuges unabhängig von der Betätigung einer Fahrgastnotbremse unwirksam geschaltet werden.

4. Verfahren zur Steuerung einer Notbremsüberbrückungseinrichtung nach Anspruch 1, **dadurch gekennzeichnet dass** eine Zugfahrt in einzelne Phasen unterteilt wird.

5. Verfahren zur Steuerung einer Notbremsüberbrückungseinrichtung nach Anspruch 4, **dadurch gekennzeichnet dass** für die Bestimmung der einzelnen Phasen im führenden Fahrzeug die Signale "Verriegelung der Einstiegtüren im Zug" und "Fahrgeschwindigkeit gleich Null" erfasst werden.

6. Verfahren zur Steuerung einer Notbremsüberbrückungseinrichtung nach Anspruch 4, **dadurch gekennzeichnet dass** die Phase "Halt mit zur Öffnung freigegebenen Einstiegtüren", durch die Kriterien "Fahrgeschwindigkeit gleich Null" und "Einstiegtüren nicht verriegelt" bestimmt wird.

7. Verfahren zur Steuerung einer Notbremsüberbrückungseinrichtung nach Anspruch 4, **dadurch gekennzeichnet dass** die Phase "Anfahrt nach Halt mit Türfreigabe", dadurch bestimmt wird, dass unter den Bedingungen, dass die Einstiegtüren verriegelt sind und der Zug mit einer Fahrgeschwindigkeit größer Null rollt eine bestimmte Zeit T1 abläuft.

8. Verfahren zur Steuerung einer Notbremsüberbrückungseinrichtung nach Anspruch 7, **dadurch gekennzeichnet dass** die die Zeit T1 für bestimmte Zuggattungen unter Berücksichtigung von Anfahrbeschleunigung, Bremsvermögen und Zuglänge so festgelegt wird, dass bei einer Notbremsung der Zug so zum Halt kommt, dass Fahrgäste den Bahnsteig sicher wieder erreichen können.

9. Verfahren zur Steuerung einer Notbremsüberbrückungseinrichtung nach mindestens einem der Ansprüche 1 bis 8, **dadurch gekennzeichnet dass** bei aktivierter Funktion "NBÜ" während der Phase "Halt mit zur Öffnung freigegebenen Einstiegtüren" und während der Phase "Anfahrt nach Halt mit Türfreigabe" durch die Betätigung einer Fahrgastnotbremse eine sofortige, nicht überbrückbare Notbremsung bewirkt wird.

10. Verfahren zur Steuerung einer Notbremsüberbrückungseinrichtung nach mindestens einem der Ansprüche 1 bis 9, **dadurch gekennzeichnet dass** während der Phasen "Halt mit zur Öffnung freigegebenen Einstiegtüren" und "Anfahrt nach Halt mit Türfreigabe" vom führenden Fahrzeug kein Notbremsüberbrückungsbefehl ausgegeben wird.

11. Verfahren zur Steuerung einer Notbremsüberbrückungseinrichtung nach mindestens einem der Ansprüche 4 und 7, **dadurch gekennzeichnet dass** bei aktivierter Funktion "NBÜ" die Phase "Fahrt" begonnen wird, wenn die Zeit T1 bei verriegelten Einstiegtüren und rollendem Zug abgelaufen und die Phase der Anfahrt beendet ist.

12. Verfahren zur Steuerung einer Notbremsüberbrückungseinrichtung nach mindestens einem der Ansprüche 1 bis 11, **dadurch gekennzeichnet dass** während der Phase "Fahrt"
- die Notbremseinrichtung unwirksam geschaltet wird, solange keine Fahrgastnotbremse betätigt wird,
- wenn keine Notbremsbetätigung erfolgt, das Unwirksamschalten der Notbremseinrichtung bei Zughalt mit Türfreigabe oder durch Ausschalten der Betriebsart NBÜ wieder aufgehoben wird.

13. Verfahren zur Steuerung einer Notbremsüberbrückungseinrichtung nach mindestens einem der Ansprüche 1 bis 12, **dadurch gekennzeichnet dass** die Notbremseinrichtung für eine bestimmte Zeit T2 weiterhin unwirksam geschaltet verbleibt, wenn während der Phase "Fahrt" eine Fahrgastnotbremse betätigt wird.

14. Verfahren zur Steuerung einer Notbremsüberbrückungseinrichtung nach mindestens einem der Ansprüche 1 bis 13, **dadurch gekennzeichnet dass,** wenn während der Phase "Fahrt" eine Fahrgastnotbremse betätigt wird, und wenn die Fahrt fortgesetzt werden soll,
- diese erste Notbremsmeldung in dem vorgegebenen Zeitrahmen der Zeit T2 durch den Fahrzeugführer quittiert wird,
- mit dieser Quittierung die NBÜ bis zum nächsten Halt mit Türfreigabe wirksam und damit die Notbremseinrichtungen im gesamten Zug unwirksam geschaltet werden,
- die Überbrückung auch bei außerplanmäßigem Halt auf freier Strecke (z.B. Halt-zeigendes Signal) wirksam bleibt, solange keine Freigabe der Türverriegelung durchgeführt wird.

15. Verfahren zur Steuerung einer Notbremsüberbrückungseinrichtung nach mindestens einem der Ansprüche 1 bis 14, **dadurch gekennzeichnet dass,**
- die Aufhebung der nach Betätigung einer Fahrgastnotbremse und Quittierung durch den Fahrzeugführer wirkenden NBÜ mit der Zeitverzögerung T3 nach Erreichen der Phase Zughalt mit Türfreigabe durchgeführt wird,
- nach Ablauf der Zeitverzögerung T3 die Notbremsung wirksam wird und eine Aufhebung dieser Notbremsung nur durch Rückstellen der betätigten Fahrgastnotbremse ermöglicht wird.

16. Verfahren zur Steuerung einer Notbremsüberbrückungseinrichtung nach mindestens einem der Ansprüche 1 bis 15, **dadurch gekennzeichnet dass,**
- falls der Fahrzeugführer auf eine Notbremsmeldung während der Phase Fahrt nicht innerhalb der Zeit T2 reagiert, danach die Notbremsüberbrückung unwirksam und die Notbremsung eingeleitet wird,
- solange inzwischen kein neuer Halt mit Türfreigabe vorliegt, diese zwangsweise eingeleitete Notbremsung durch den Fahrzeugführer wieder überbrückt werden kann.

17. Verfahren zur Steuerung einer Notbremsüberbrückungseinrichtung nach mindestens einem der Ansprüche 1 bis 16, **dadurch gekennzeichnet dass,**
- falls durch den Fahrzeugführer entschieden wird, dass bei Notbremsmeldung während der Phase Fahrt der Zug angehalten werden soll, durch den Fahrzeugführer eine Schnellbremsung eingeleitet, damit der Befehl NBÜ sofort rückgesetzt und die Notbremsung wirksam wird,
- solange die Phase Zughalt mit Türfreigabe nicht erreicht ist, eine durch Schnellbremsung unterstützte Notbremsung vom Fahrzeugführer wieder aufgehoben werden kann.

18. Verfahren zur Steuerung einer Notbremsüberbrückungseinrichtung nach mindestens einem der Ansprüche 1 bis 3, 9, 10 und 12 bis 17, **dadurch gekennzeichnet dass** für die Meldung "Fahrgastnotbremse" und für die Befehlsausgabe "NBÜ" getrennte Signalwege verwendet werden.

19. Verfahren zur Steuerung einer Notbremsüberbrückungseinrichtung nach Anspruch 18, **dadurch gekennzeichnet dass** bei Signalübertragung nach UIC 541-5 für die Übertragung des Befehls "NBÜ" die Adern 1 und 2 verwendet werden.

20. Verfahren zur Steuerung einer Notbremsüberbrückungseinrichtung nach mindestens einem der Ansprüche 3 und 18, **dadurch gekennzeichnet dass** die Funktionsfähigkeit des NBÜ-Befehls bis zur letzten Einheit des Zugverbandes geprüft wird, indem seine Wirksamkeit an der letzten Einheit des Zugverbandes ein entsprechendes Signal über den Meldeweg Fahrgastnotbremse auslöst, welches im Führerraum ausgewertet und angezeigt wird.

21. Verfahren zur Steuerung einer Notbremsüberbrückungseinrichtung nach mindestens einem der Ansprüche 18 bis 20, **dadurch gekennzeichnet dass**
- bei Signalübertragung nach UIC 541-5 durch den Befehl "NBÜ" am Zugschluss eine Änderung des Schleifenwiderstandes zwischen den Adern D und 4 bewirkt wird,
- durch Erfassung der Widerstandsänderung bei Ausgabe des Befehls "NBÜ" im führenden Fahrzeug die Funktionsfähigkeit der NBÜ bis zum letzten Fahrzeug des Verbandes geprüft wird.

22. Verfahren zur Steuerung einer Notbremsüberbrückungseinrichtung nach mindestens einem der Ansprüche 18 und 20, **dadurch gekennzeichnet dass** bei Signalübertragung mittels elektronischem Bussystem die Meldung "Fahrgastnotbremse", der Befehl "NBÜ" und die Rückmeldung der Wirksamkeit der Notbremsüberbrückungseinrichtung vom letzten Fahrzeug des Zugverbandes über separate Telegramme übertragen werden.

23. Verfahren zur Steuerung einer Notbremsüberbrückungseinrichtung nach mindestens einem der Ansprüche 1 bis 22, **dadurch gekennzeichnet dass** in allen Einheiten mit Notbremseinrichtung, unabhängig davon, ob eine Fahrgastnotbremse betätigt wird, eine vom führenden Fahrzeug aus wirkende Notbremsüberbrückung durch eine optische Meldung angezeigt wird.

24. Verfahren zur Steuerung einer Notbremsüberbrückungseinrichtung nach Anspruch 1, **dadurch gekennzeichnet dass** bei Ausrüstung der Wagen mit NBÜ-Systemen des Standes der Technik im führenden Fahrzeug wählbar ist, dass nach Betätigung einer Fahrgastnotbremse in jedem Fall zunächst eine definierte Bremsung ausgelöst wird, die anschließend wieder überbrückt wird.

25. Verfahren zur Steuerung einer Notbremsüberbrückungseinrichtung nach mindestens einem der Ansprüche 1 bis 24, **dadurch gekennzeichnet dass**
- nach Meldung der ersten Betätigung einer Fahrgastnotbremse eine akustische Meldung im Führerraum auch bei unmittelbar anstehendem Quittungssignal für mindestens 2 Sekunden ausgegeben wird,
- nach Quittierung der Notbremsmeldung die akustische Meldung ausgeschaltet wird,
- nach der ersten durch den Fahrzeugführer quittierten Notbremsmeldung und damit wirkender NBÜ, dem Fahrzeugführer weitere Notbremsbetätigungen nicht erneut akustisch gemeldet werden,
- nach einer quittierten Notbremsmeldung bei Erreichen der Phase "Halt mit Türfreigabe" die akustische Meldung im Führerraum erneut aktiviert wird, solange bis alle Fahrgastnotbremsen im Zug rückgestellt werden.

## Claims

1. A method for controlling an emergency brake bypass system that is abbreviated in the form of NBÜ below and a monitoring of the emergency braking devices of rail-borne vehicles that consist of an individual vehicle or of a train comprising a leading vehicle and at least one trailing vehicle, wherein the number of trailing vehicles as well as the composition of the train can be adapted to certain circumstances such as, for example, the passenger volume or a track progression, **characterized in that**
- the emergency brake bypass function is activated on sections on which a NBÜ is mandatory and deactivated on sections on which a NBÜ is not required,
- the actuation of a passenger emergency brake in the train initiates an immediate emergency braking maneuver of the train regardless of the actions of the train conductor when the emergency brake bypass function is deactivated, and
- methods for controlling an emergency brake bypass system known from the state of the art are additionally implemented in the leading vehicle in accordance with the technical equipment of an emergency brake bypass system in the trailing vehicles and the system is accordingly switched over to these methods.

2. The method for controlling an emergency brake bypass system according to Claim 1, **characterized in that** the technical system reacts to the actuation of passenger emergency brakes differently when the "NBÜ" function is activated, namely in accordance with the respective operating situation.

3. The method for controlling an emergency brake bypass system according to Claim 1 or 2, **characterized in that** the emergency braking devices of the entire train are rendered ineffective with a NBÜ-command from the leading vehicle regardless of the actuation of a passenger emergency brake.

4. The method for controlling an emergency brake bypass system according to Claim 1, **characterized in that** a train run is divided into individual phases.

5. The method for controlling an emergency brake bypass system according to Claim 4, **characterized in that** the signals "locked access doors in the train" and "traveling speed equal to zero" are registered in the leading vehicle for the determination of the individual phases.

6. The method for controlling an emergency brake bypass system according to Claim 4, **characterized in that** the phrase "stop with access doors released for opening" is defined by the criteria "traveling speed equal to zero" and "access doors unlocked."

7. The method for controlling an emergency brake bypass system according to Claim 4, **characterized in that** the "initial departure phase after a stop with released doors" is defined **in that** a certain time period T1 elapses under the conditions that the access doors are locked and the train is moving with a traveling speed greater than zero.

8. The method for controlling an emergency brake bypass system according to Claim 7, **characterized in that** the time period T1 is defined for certain train types with consideration of the starting acceleration, the stopping power and the train length such that the train is stopped in such a way after an emergency braking maneuver that the passengers can safely reach the platform again.

9. The method for controlling an emergency brake bypass system according to at least one of Claims 1 to 8, **characterized in that**, when the "NBÜ" function is activated, an immediate emergency braking maneuver that cannot be bypassed is initiated in response to the actuation of a passenger emergency brake during the phases "stop with access doors released for opening" and "initial departure phase after a stop with released doors."

10. The method for controlling an emergency brake bypass system according to at least one of Claims 1 to 9, **characterized in that** no emergency brake bypass command is issued by the leading vehicle during the phases "stop with access doors released for opening" and "initial departure phase after a stop with released doors."

11. The method for controlling an emergency brake bypass system according to at least one of Claims 4 and 7, **characterized in that**, when the "NBÜ" function is activated, the "train run" phase begins once the time period T1 has elapsed while the access doors are locked and the train is moving and once the initial departure phase is completed.

12. The method for controlling an emergency brake bypass system according to at least one of Claims 1 to 11, **characterized in that** during the "train run" phase
- the emergency braking device is rendered ineffective as long as no passenger emergency brake is actuated and
- the emergency braking device is rendered effective again during a train stop with released doors or by switching off the operating mode NBÜ if no actuation of the emergency brake takes place.

13. The method for controlling an emergency brake bypass system according to at least one of Claims 1 to 12, **characterized in that** the emergency braking device continues to remain in the ineffective state for a certain time period T2 if a passenger emergency brake is actuated during the "train run" phase.

14. The method for controlling an emergency brake bypass system according to at least one of Claims 1 to 13, **characterized in that**, if a passenger emergency brake is actuated during the "train run" phase and the train run should be continued,
- this first emergency braking message is acknowledged by the train conductor within the duration defined by the time period T2,
- the NBÜ is rendered effective until the next stop with released doors and the emergency braking devices in the entire train are rendered ineffective with this acknowledgement, and
- the bypassing also remains ineffective during unscheduled stops on a clear track (e.g., stop signal) as long as the door locking mechanism is not released.

15. The method for controlling an emergency brake bypass system according to at least one of Claims 1 to 14, **characterized in that**
- the cancellation of the NBÜ that was activated after the actuation of a passenger emergency brake and the acknowledgement by the train conductor takes place with a time delay T3 after the phase train stop with released doors is reached, and
- the emergency braking maneuver is initiated after the time delay T3 and this emergency braking maneuver can only be canceled by resetting the actuated passenger emergency brake.

16. The method for controlling an emergency brake bypass system according to at least one of Claims 1 to 15, **characterized in that**
- the emergency brake bypass system is rendered ineffective and an emergency braking maneuver is initiated if the train conductor does not react to an emergency braking message within the time period T2 during the train run phase, and
- this automatically initiated emergency braking maneuver can be bypassed again by the train conductor as long as no new stop with released doors has occurred in the meantime.

17. The method for controlling an emergency brake bypass system according to at least one of Claims 1 to 16, **characterized in that**
- a rapid stop is initiated by the train conductor such that the NBÜ command is immediately reset and the emergency braking devices become effective if the train conductor decides that the train should be stopped when an emergency braking message is received during the train run phase, and
- an emergency braking maneuver assisted by a rapid stop can be canceled again by the train conductor as long as the phase train stop with released doors is not reached.

18. The method for controlling an emergency brake bypass system according to at least one of Claims 1 to 3, 9, 10 and 12 to 17, **characterized in that** separate signaling paths are used for the message "passenger emergency brake" and for the "NBÜ" command.

19. The method for controlling an emergency brake bypass system according to Claim 18, **characterized in that** the leads 1 and 2 are used for the transmission of the "NBÜ" command if the signal transmission takes place in accordance with UIC 541-5.

20. The method for controlling an emergency brake bypass system according to at least one of Claims 3 and 18, **characterized in that** the effectiveness of the NBÜ-command up to the last unit of the train is checked by said command triggering a corresponding signal in the last unit of the train on the passenger emergency brake message path and by displaying and evaluating said signal in the conductor's cab.

21. The method for controlling an emergency brake bypass system according to at least one of Claims 18 to 20, **characterized in that**,
- if the signal transmission takes place in accordance with UIC 541-5, the "NBÜ" command causes a change in the loop resistance between the leads D and 4 at the end of the train, and
- the effectiveness of the NBÜ up to the last vehicle of the train is checked in the leading vehicle by detecting the change in resistance when the "NBÜ" command is issued.

22. The method for controlling an emergency brake bypass system according to at least one of Claims 18 and 20, **characterized in that**, if the signal transmission is realized by means of an electronic bus system, the message "passenger emergency brake," the "NBÜ" command and the feedback indicating the effectiveness of the emergency brake bypass system are transmitted from the last vehicle of the train via separate telegrams.

23. The method for controlling an emergency brake bypass system according to at least one of Claims 1 to 22, **characterized in that** the bypassing of an emergency brake initiated from the leading vehicle is displayed in the form of an optical message in all units with an emergency braking device, namely regardless of the fact whether a passenger emergency brake is actuated or not.

24. The method for controlling an emergency brake bypass system according to Claim 1, **characterized in that** an operating mode in which a defined braking maneuver that can subsequently be bypassed again is initially initiated in any case in response to the actuation of a passenger emergency brake can be selected in the leading vehicle if the train cars are equipped with NBÜ-systems according to the state of the art.

25. The method for controlling an emergency brake bypass system according to at least one of Claims 1 to 24, **characterized in that**
- an acoustic message is output for at least 2 seconds in the conductor's cab after the first actuation of a passenger emergency brake is signaled, namely also if an immediate acknowledgment signal is pending,
- the acoustic message is switched off after the emergency braking message is acknowledged,
- no additional acoustic emergency braking messages are transmitted to the train conductor after the first emergency braking message was acknowledged by the train conductor and the NBÜ was activated, and
- after an emergency braking message was acknowledged, the acoustic message is reactivated in the conductor's cab when the phase "stop with a released doors" is reached, namely until all passenger emergency brakes in the train are reset.

## Revendications

1. Procédé de commande d'un dispositif de neutralisation de frein d'urgence, abrégé ci-après par NFU, et de surveillance des équipements de freinage d'urgence de véhicules sur rails qui sont composés d'un véhicule isolé ou d'un convoi ferroviaire constitué d'un véhicule conducteur et d'au moins un véhicule guidé, le nombre de véhicules guidés de même qu'une composition du convoi ferroviaire étant adaptables à certaines données comme la capacité en passagers ou un déroulement de parcours, **caractérisé en ce que**
- la fonction de neutralisation du frein d'urgence est activée sur les parcours où une NFU est prescrite et désactivée sur les parcours où une NFU n'est pas nécessaire,
- dans le cas de la désactivation d'une fonction neutralisation du frein d'urgence, l'actionnement d'un frein d'urgence pour passagers dans le train déclenche automatiquement un freinage d'urgence immédiat du train indépendamment de l'action du conducteur du train,
- dans le véhicule conducteur, en fonction de la réalisation technique d'un dispositif de neutralisation du frein d'urgence dans les véhicules guidés, des procédés connus de commande de neutralisation du frein d'urgence de l'état de la technique sont en outre mis en oeuvre en plus et permutés en conséquence sur ceux-ci.

2. Procédé de commande d'un dispositif de neutralisation de frein d'urgence selon la revendication 1, **caractérisé en ce qu'**en cas d'activation de la fonction « NBU », le système technique réagit différemment en fonction de la situation d'exploitation respective à l'actionnement des freins d'urgence pour passagers.

3. Procédé de commande d'un dispositif de neutralisation de frein d'urgence selon les revendications 1 et 2, **caractérisé en ce que** les équipements de freinage d'urgence de l'ensemble du train sont mis en désactivation par un ordre de NFU du véhicule conducteur indépendamment de l'actionnement d'un frein d'urgence pour passagers.

4. Procédé de commande d'un dispositif de neutralisation de frein d'urgence selon la revendication 1, **caractérisé en ce qu'**un parcours ferroviaire est divisé en phases distinctes.

5. Procédé de commande d'un dispositif de neutralisation de frein d'urgence selon la revendication 4, **caractérisé en ce que**, pour la définition des phases distinctes dans le véhicule conducteur, les signaux « verrouillage des portières d'accès dans le train » et « vitesse de circulation égale à zéro » sont enregistrés.

6. Procédé de commande d'un dispositif de neutralisation de frein d'urgence selon la revendication 4, **caractérisé en ce que** la phase « arrêt avec portières d'accès débloquées pour l'ouverture » est définie par les critères « vitesse de circulation égale à zéro » et « portières d'accès non verrouillées ».

7. Procédé de commande d'un dispositif de neutralisation de frein d'urgence selon la revendication 4, **caractérisé en ce que** la phase « démarrage après arrêt avec déblocage des portières » est définie par le fait qu'à condition que les portières d'accès soient verrouillées et que le train roule à une vitesse de circulation supérieure à zéro, un certain temps T1 s'écoule.

8. Procédé de commande d'un dispositif de neutralisation de frein d'urgence selon la revendication 7, **caractérisé en ce que** le temps T1 est fixé pour certains types de trains en tenant compte de l'accélération au démarrage, de la puissance de freinage et de la longueur du train de manière à ce qu'en cas de freinage d'urgence, le train arrive à s'arrêter de manière à ce que les passagers puissent retourner en sécurité au quai.

9. Procédé de commande d'un dispositif de neutralisation de frein d'urgence selon au moins une des revendications 1 à 8, **caractérisé en ce que**, dans le cas d'activation de la fonction « NFU » pendant la phase « arrêt avec portières d'accès débloquées pour l'ouverture » et pendant la phase « démarrage après arrêt avec déblocage des portières », un freinage d'urgence immédiat ne pouvant être neutralisé est provoqué par l'actionnement d'un frein d'urgence pour passagers.

10. Procédé de commande d'un dispositif de neutralisation de frein d'urgence selon au moins une des revendications 1 à 9, **caractérisé en ce que**, pendant les phases « arrêt avec portières d'accès débloquées pour l'ouverture » et « démarrage après arrêt avec déblocage des portières », aucun ordre de neutralisation de frein d'urgence n'est émis par le véhicule conducteur.

11. Procédé de commande d'un dispositif de neutralisation de frein d'urgence selon au moins une des revendications 4 et 7, **caractérisé en ce qu'**en cas d'activation de la fonction « NFU », la phase « circulation » commence lorsque le temps T1 s'est écoulé, les portières d'accès étant verrouillées et le train étant en train de rouler, et que la phase de démarrage est terminée.

12. Procédé de commande d'un dispositif de neutralisation de frein d'urgence selon au moins une des revendications 1 à 11, **caractérisé en ce que**, pendant la phase « circulation »,
- l'équipement de freinage d'urgence est mis en désactivation tant qu'aucun frein d'urgence pour passagers n'est actionné,
- s'il n'y a pas d'actionnement du frein d'urgence, la mise en désactivation de l'équipement de freinage d'urgence est suspendue en cas d'arrêt du train avec déblocage des portières ou par désactivation du mode de fonctionnement NFU.

13. Procédé de commande d'un dispositif de neutralisation de frein d'urgence selon au moins une des revendications 1 à 12, **caractérisé en ce que** l'équipement de freinage d'urgence reste en désactivation pendant un certain temps T2 si, pendant la phase « circulation », un frein d'urgence pour passagers est actionné.

14. Procédé de commande d'un dispositif de neutralisation de frein d'urgence selon au moins une des revendications 1 à 13, **caractérisé en ce que**, pendant la phase « circulation », un frein d'urgence pour passagers est actionné et, si la circulation doit être poursuivie,
- ce premier message de freinage d'urgence est confirmé pendant le laps de temps prescrit du temps T2 par le conducteur du véhicule,
- par cette confirmation, la NFU est mise en désactivation jusqu'au prochain arrêt avec déblocage des portières et les équipements de freinage d'urgence sont ainsi mis en désactivation dans l'ensemble du train,
- la neutralisation reste aussi active même en cas d'arrêt non prévu sur parcours dégagé (par exemple signal indicateur d'arrêt) tant qu'un déblocage du verrouillage des portières n'est pas réalisé.

15. Procédé de commande d'un dispositif de neutralisation de frein d'urgence selon au moins une des revendications 1 à 14, **caractérisé en ce que**
- la suspension de la NFU agissant après l'actionnement d'un frein d'urgence pour passagers et la confirmation par le conducteur du véhicule est réalisée avec le délai T3 après atteinte de la phase arrêt du train avec déblocage des portières,
- après écoulement du délai T3, le freinage d'urgence devient actif et une suspension de ce freinage d'urgence n'est possible qu'en réinitialisant le frein d'urgence pour passagers actionné.

16. Procédé de commande d'un dispositif de neutralisation de frein d'urgence selon au moins une des revendications 1 à 15, **caractérisé en ce que**
- si le conducteur du train ne réagit pas à un message de freinage d'urgence pendant la phase circulation pendant le délai T2, la neutralisation du frein d'urgence devient alors inactive et le freinage d'urgence est initié,
- tant qu'il n'y a aucun nouvel arrêt avec déblocage des portières, ce freinage d'urgence initié de force peut à nouveau être neutralisé par le conducteur du véhicule.

17. Procédé de commande d'un dispositif de neutralisation de frein d'urgence selon au moins une des revendications 1 à 16, **caractérisé en ce que**
- s'il n'est pas décidé par le conducteur du train que le train doit, en cas de message de freinage d'urgence, être arrêté pendant la phase circulation, un freinage rapide est initié par le conducteur du véhicule, l'ordre de NFU est ainsi immédiatement réinitialisé et le freinage d'urgence devient actif,
- tant que la phase arrêt du train avec déblocage des portières n'est pas atteinte, un freinage d'urgence assisté par freinage rapide peut à nouveau être suspendu par le conducteur du véhicule.

18. Procédé de commande d'un dispositif de neutralisation de frein d'urgence selon au moins une des revendications 1 à 3, 9, 10 et 12 à 17, **caractérisé en ce que**, pour le message « frein d'urgence pour passagers » et pour l'émission d'ordre « NFU », on utilise des voies de signalisation séparées.

19. Procédé de commande d'un dispositif de neutralisation de frein d'urgence selon la revendication 18, **caractérisé en ce que**, lors de la transmission de signaux conformément à l'UIC 541-5, on utilise pour la transmission de l'ordre « NBU » les câbles 1 et 2.

20. Procédé de commande d'un dispositif de neutralisation de frein d'urgence selon au moins une des revendications 3 et 18, **caractérisé en ce que** la fonctionnalité de l'ordre de NBU est contrôlée jusqu'à la dernière unité du convoi ferroviaire du fait que son action sur la dernière unité du convoi ferroviaire déclenche par la voie de signalisation frein d'urgence pour passagers un signal correspondant qui est exploité et affiché dans la cabine du conducteur.

21. Procédé de commande d'un dispositif de neutralisation de frein d'urgence selon au moins une des revendications 18 à 20, **caractérisé en ce que**
- lors de la transmission de signaux conformément à l'UIC 541-5, une modification de la résistance de boucle entre les câbles D et 4 est provoquée par l'ordre « NFU » en queue de train,
- en enregistrant la résistance de boucle lors de l'émission de l'ordre « NFU » dans le véhicule conducteur, la fonctionnalité de la NFU est contrôlée jusqu'au dernier véhicule du convoi.

22. Procédé de commande d'un dispositif de neutralisation de frein d'urgence selon au moins une des revendications 18 et 20, **caractérisé en ce qu'**en cas de transmission de signaux au moyen d'un système de bus électronique, le message « frein d'urgence pour passagers », l'ordre « NFU » et la réinitialisation de l'action de l'équipement de freinage d'urgence par le dernier véhicule du convoi ferroviaire sont transmises par des télégrammes séparés.

23. Procédé de commande d'un dispositif de neutralisation de frein d'urgence selon au moins une des revendications 1 à 22, **caractérisé en ce que**, dans toutes les unités à équipement de freinage d'urgence, indépendamment de l'actionnement d'un frein d'urgence pour passagers, une neutralisation du frein d'urgence agissant du fait du conducteur du véhicule est affichée par un message optique.

24. Procédé de commande d'un dispositif de neutralisation de frein d'urgence selon la revendication 1, **caractérisé en ce qu'**en cas d'équipement des wagons avec des systèmes de NFU de l'état de la technique, on peut choisir dans le véhicule conducteur qu'après l'actionnement d'un frein d'urgence pour passagers, il soit d'abord déclenché un freinage défini qui est ensuite à nouveau neutralisé.

25. Procédé de commande d'un dispositif de neutralisation de frein d'urgence selon au moins une des revendications 1 à 24, **caractérisé en ce que**,
- après message du premier actionnement d'un frein d'urgence pour passagers, un message acoustique est émis dans la cabine du conducteur même dans le cas d'un signal de confirmation se manifestant directement pendant au moins 2 secondes,
- après confirmation du message de freinage d'urgence, le message acoustique est désactivé,
- après le premier message de freinage d'urgence confirmé par le conducteur du véhicule et la NFU étant ainsi active, les autres actionnements de frein d'urgence ne sont pas signalés à nouveau acoustiquement au conducteur du train,
- après un message de freinage d'urgence confirmé, à l'atteinte de la phase « arrêt avec déblocage des portières », le message acoustique est activé à nouveau dans la cabine du conducteur jusqu'à ce que tous les freins d'urgence pour passagers du train soient réinitialisés.
